# EUROPEAN PATENT SPECIFICATION

(11) **EP 1 686 642 B1**
(45) Date of publication and mention of the grant of the patent: **13.08.2008**
(21) Application number: 05106732.0
(22) Date of filing: 22.07.2005
(51) Int. Cl.: H01M 8/02, H01M 8/24, H01M 8/04, H01M 8/10

(54) **fuel cell stack and fuel cell system having the same**
Brennstoffzellenstapel und diesen enthaltendes Brennstoffzellensystem
Empilement de piles à combustible et système de pile à combustible comprenant ledit empilement

(30) Priority: 28.01.2005 KR 2005007919
(43) Date of publication of application: 02.08.2006
(60) Divisional application: 08157134.1
(73) Proprietor: Samsung SDI Co., Ltd., Suwon-si Gyeonggi-do (KR)
(72) Inventor: Suh, Jun-Won Legal & IP Team, Samsung SDI Co.,LTD,, Kyunggi-do (KR); Kweon, Ho-Jin, Legal&IP Team,Samsung SDI Co., LTD., Kyunggi-do (KR)
(74) Representative: Hengelhaupt, Jürgen

(56) References cited:
- WO-A-20/04079838
- US-A- 4 192 906
- US-A- 4 578 324
- US-A- 6 066 409
- PATENT ABSTRACTS OF JAPAN vol. 013, no. 058 (E-714), 9 February 1989 (1989-02-09) & JP 63 248073 A (FUJI ELECTRIC CO LTD), 14 October 1988 (1988-10-14)

## Description

### FIELD OF THE INVENTION

The present invention relates to a fuel cell system, and more particularly to a stack of a fuel cell system with improved cooling efficiency, and a fuel cell system having the same.

### BACKGROUND OF THE INVENTION

In general, a fuel cell is an electricity generating system for directly converting chemical energy into electric energy through an electrochemical reaction between oxygen contained in air and hydrogen contained in hydrocarbon-grouped materials such as methanol, ethanol, and natural gas. Specifically, fuel cells have a feature such that electricity is generated through an electrochemical reaction between a fuel gas and an oxidizing gas without combustion and with heat as a byproduct thereof.

Such fuel cells may be classified into phosphate fuel cells working at temperatures of about 150°C to 200°C, molten carbonate fuel cells working at high temperatures of about 600°C to 700°C, solid oxide fuel cells working at high temperaturesof 1000°C or more, and polymer electrolyte membrane fuel cells and alkali fuel cells working at room temperature or at temperatures of 100°C or less, depending upon the kinds of electrolyte used. All such fuel cells basically work under the same principle, but may differ from one another in the kinds of fuel, the operating temperatures, the catalysts, and the electrolytes.

Recently developed polymer electrolyte membrane fuel cells (hereinafter referred to as a PEMFCs) have excellent output characteristic, low operating temperatures, and fast starting and response characteristics compared to other fuel cells. Accordingly, PEMFCs have a wide range of applications such as for mobile power sources for vehicles, for distributed power sources for homes or buildings, and for small-sized power sources for electronic apparatuses.

A PEMFC system basically requires a fuel cell main body (hereinafter referred to as a stack for the purpose of convenience), a reformer for reforming fuel to generate hydrogen gas, a fuel tank, and a fuel pump for supplying fuel to the reformer. In a PEMFC, the fuel stored in the fuel tank is supplied to the reformer by means of pumping power of the fuel pump. Then, the reformer reforms the fuel and generates the hydrogen gas to the stack. In the stack, hydrogen gas and oxygen electrochemically react with each other, thereby generating electrical energy

Another type of fuel cell is a direct methanol fuel cell, (hereinafter referred to as a DMFC) in which liquid-state methanol fuel is supplied directly to the stack. Unlike a PEMFC, a DMFC does not require a reformer,

In the fuel cell systems described above, the stack that generates electricity has a stacked structure of several or several tens of unit cells, each of which has a membrane-electrode assembly (hereinafter referred to as an MEA) and separators (or bipolar plates). The MEA includes an anode electrode and a cathode electrode attached to either side of an electrolyte membrane. The separator simultaneously functions as a passage through which oxygen and hydrogen gas required for the reaction of the fuel cell are supplied, and as a conductor connecting the anode electrode and the cathode electrode of each MEA in series.

Through the bipolar plate, fuel gas containing hydrogen is supplied to the anode electrode and oxygen gas containing oxygen is supplied to the cathode electrode. An oxidation reaction of the fuel gas takes place in the anode electrode and a reduction reaction of the oxygen gas takes place in the cathode electrode. Due to movement of electrons, electricity, heat, and water can be produced simultaneously.

In such a fuel cell system, when the operating temperature deviates from an appropriate range, the performance of the electrolyte membrane deteriorates and safety thereof cannot be ensured. Furthermore, in a serious case, the fuel cell may be damaged. Therefore, a cooling means using air or water is often provided within the fuel cell system in order to continuously remove heat generated inside the stack when operating the fuel cell system.

However, the adaptation of the same cooling scheme to all parts of the stack in a conventional cooling scheme makes it difficult to effectively cool all unit cells of a stack which may have substantially different temperature distributions depending on their positions within the stack.

Specifically, a unit cell located at a central portion among unit cells of the stack tends to have a temperature that is higher than that of a unit cell located near either end of the stack.

In the conventional fuel cell system, since heat generated in each of the stacked unit cells is not uniformly released, the performance of the stack deteriorates, thereby decreasing the overall efficiency of the fuel cell system.

In JP 63248073 a cross section area of each cooling medium passage of a cooling plate positioned at both end zones of the stack is narrowed compared to a cooling plate in the central zone. US 4,578,324 provides an active cooling system for cooling electrochemical cells that are arranged in a stack. The cooling system comprises cooling panels carrying a cooling fluid that flows adjacent to, and parallel to the plane of each cell. The rate of cooling flow pst each cell is made to be substantially equal, e.g. by use of dual cooling panels. WO 2004/079838 A2 refers to a fuel cell stack inter alia disclosing a set of thermal radiation fins provided at a side edge portion of the stack. The radiation fins have different widths and lengths and air supply fans cause a cooling air flow from the side surface of the fins through the separator via opening portions. According to the difference in position of each radiation fin a temperature gradient in the stack can be suppressed.

### SUMMARY OF THE INVENTION

The present invention is directed to a fuel cell system that is capable of quickly releasing heat generated from the entire stack and of uniformly maintaining the temperature of the entire stack within an appropriate range by changing the heat-emission structure depending on location within the stack

According to the present invention, a fuel cell stack and a fuel cell system are provided that are capable of uniformly maintaining temperature distribution throughout the entire stack by quickly absorbing heat locally generated in the stack.

According to one embodiment of the present invention, a fuel cell stack is provided, the stack comprising an electricity generating unit including a plurality of unit cells, and a cooling unit supplying specific unit cells with coolant to correspond to differences in heat-emission depending on the different positions of each of the unit cells.

According to the invention, the electricity generating unit may generate more heat toward a central portion of the stack, so the cooling unit may provide an increased amount of coolant toward a central portion of the stack.

According to the invention, there is provided fuel cell stack, comprising:
- a plurality of electricity generators, each including separators attached to and disposed at both sides of a membrane-electrode assembly; and
- a plurality of heat releasing means for releasing heat generated from the electricity generators, wherein the heat releasing means have different heat release rates depending on their positions with respect to the electricity generators in the stack, and wherein the heat release rates of the heat releasing means increase toward a central portion of the stack and the heat releasing means comprise a plurality of fans for directing cooling air to the electricity generator.

The fuel cell stack is characterized in that the plurality of the fans is adapted to direct the cooling air in greater quantities toward the electricity generators located at a central portion of the stack than toward the electricity generators located at the ends of the stack.

The stack may further comprise a housing constituting an external frame of the stack, wherein the housing holds the plurality of fans.

### BRIEF DESCRIPTION OF THE DRAWING

The above and other features and advantages of the present invention will become more apparent by describing in detail exemplary embodiments thereof with reference to the attached drawings, in which:
Fig. 1 is a schematic diagram illustrating the entire structure of a fuel cell system according to an embodiment of the present invention; and
Fig. 2 is a schematic diagram illustrating a heat emission structure for a stack according to the present invention.

### DETAILED DESCRIPTION

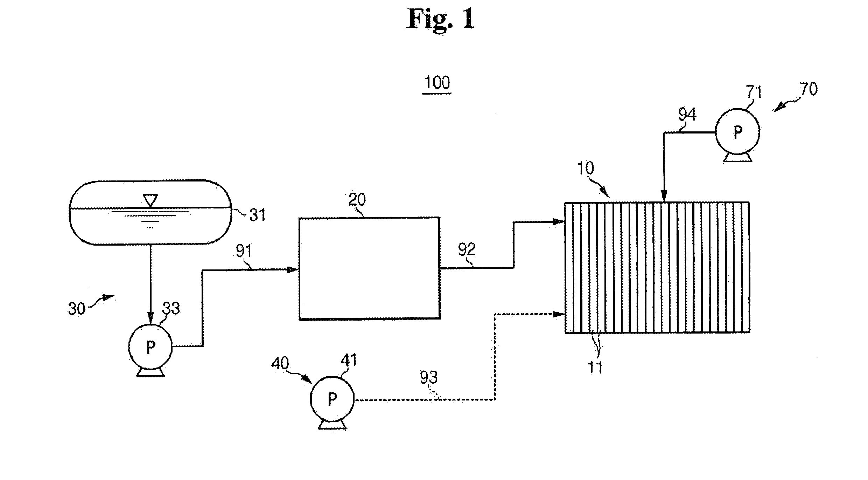

Fig. 1 is a schematic diagram illustrating a structure of a fuel cell system.

Referring to Fig. 1, the fuel cell system 100 according to the present invention comprises a stack 10 in which a number of electricity generators 11 for converting chemical energy into electric energy through a chemical reaction between hydrogen and oxygen are stacked, a fuel supply unit 30 for supplying the hydrogen-containing fuel to the electricity generators 11, an air supply unit 40 for supplying air to the electricity generators 11, and a coolant supply unit 70 for supplying a coolant to the stack 10 in order to control the temperature of the electricity generators 11.

The fuel supply unit 30 includes a fuel tank 31 in which a hydrogen-containing liquid-fuel is stored, and a fuel pump 33 connected to the fuel tank 31 to discharge the stored fuel to the stack 10 through an optional reformer 20 disposed between the fuel supply unit 30 and the stack 10. The reformer 20 is connected to the fuel supply unit 30 via a first supply line 91, and to the stack 10 via a second supply line 92.

When the fuel cell system of the present invention employs a DMFC scheme for supplying liquid fuel directly to a stack to generate electricity, the reformer is excluded, unlike in the above-mentioned PEMFG scheme. Hereinafter, the present invention will be described with reference to a fuel cell system employing the PEMFC scheme which employs the reformer 20, but the present invent is not limited to the PEMFC scheme.

The reformer 20 generates hydrogen gas from the liquid fuel, which is required for generating electricity at the stack, and reduces the concentration of CO contained in the hydrogen gas. Generally, the reformer 20 includes a reforming section for reforming the liquid fuel to generate hydrogen gas, and a CO concentration reducing section for reducing the concentration of CO. The reforming section converts the fuel into reformed gas rich in hydrogen through a catalytic reaction such as steam reformation, partial oxidation, autothermal reaction. The CO reducing section reduces the concentration of CO in the reformed gas using a catalytic reaction such as a water-gas shift method, a preferential oxidation method, etc., or purification of hydrogen using a separating membrane.

In this embodiment, the fuel includes hydrocarbon fuels, which can be easily loaded and stored. Examples include methanol, ethanol, natural gas, etc. The fuel may further include a mixture of water and a hydrocarbon fuel such as methanol, ethanol, natural gas, etc. Hereinafter, ethanol, ethanol, and natural gas are referred to as "liquid fuels" for the purpose of convenience.

Pure oxygen gas stored in an additional storage unit or external air containing oxygen may be used as an oxygen source. Hereinafter, for convenience, the invention will be described with preference to an example in which external air is used, however, the invention is not so limited.

The air supply unit 40 includes an air pump 41 which is connected to the stack 10, and which draws in external air and supplies it to the stack 10. The stack 10 is connected to the air supply unit 40 through a third supply line 93.

Further, the coolant supply unit 70 includes a pump 71 which draws in a coolant and produces the coolant to the stack 10 through a fourth supply line 94. In this embodiment, air is used as the coolant, which can be easily obtained in nature.

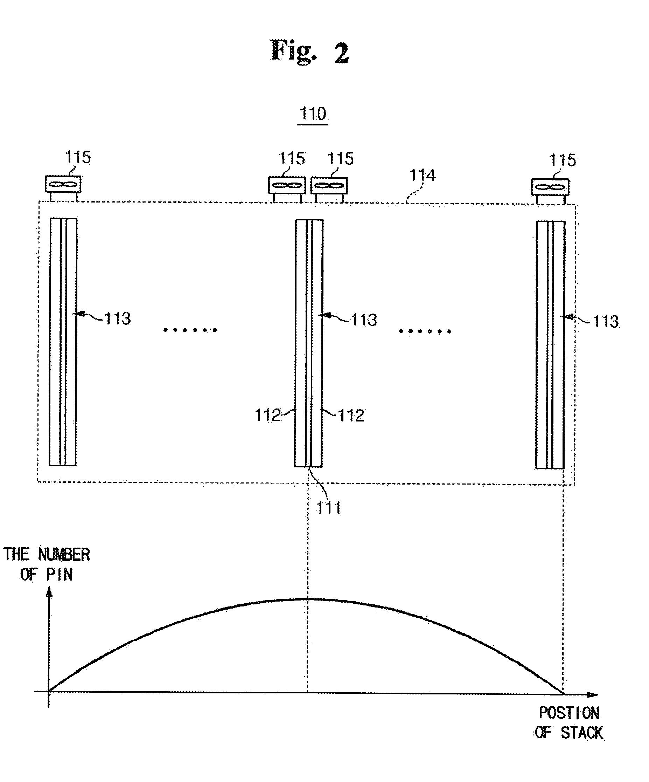

Fig. 2 illustrates a heat-emission structure of a stack according to the present invention. As shown in Fig. 2, one or more electricity generators 113 including separators 112 disposed at both sides of an MEA 111 are stacked in a stack 110, and the stack 110 includes a plurality of fans 115 which are disposed at a housing 114 surrounding the stacked electricity generators 113 and which direct a coolant (for example, cooling air) to the electricity generators 113. The amount of cooling air provided to the different electricity generators within the stack can be varied such as by varying the number of fans or the sizes of the fans at different locations in the stack. Alternatively, the output from individual fans can be varied such as by changing the pitch of the fan blades of certain fans, or by changing the speeds of certain fans.

According to the embodiment shown, the number of fans may be varied depending on the positions of the electricity generators 113 within the stack 110. The number of fans 115 increases toward a central portion of the stack 110 from the outer side thereof to correspond to the increased amount of heat generated by the electricity generators 113 at this location.

According to this configuration, cooling air supplied to the stack 110 from the coolant supply unit 70 (shown in Fig. 1) is directed in greater quantities toward the electricity generator located at a central portion of the stack than toward the electricity generator located at the outer side, whereby the electricity generator 113 showing a high temperature distribution at the central portion of the stack 110 can be effectively cooled down. Therefore, it is possible to maintain a uniform temperature distribution throughout all the regions of the stack 110.

The difference between the number of fans 115 located at the outermost position of the stack 110 and the number of fans 115 located at a central position of the stack 110 is not limited to any specific value.

According to the present embodiment, the number of fans 115 corresponding to the electricity generators 113 disposed at corresponding positions is made different depending on the position of the electricity generators 113 within the stack 110, such that air supplied to the stack 110 from the coolant supply unit 70 is directed in large quantities toward the central portion of the stack 110. Therefore, the heat of the electricity generator 113 located at the central portion of the stack 110 can be lowered more than the heat of the electricity generator 113 located at the outer side, whereby a uniform temperature distribution can be obtained throughout all the regions of the stack 110.

According to the present invention described above, the temperature of the stack at a central portion thereof can be significantly lowered, such that it is possible to have a uniform temperature distribution through the entire stack and to maintain the temperature of the stack at an appropriate level.

Further, the cooling effect of the stack can be enhances by changing the flow rate of the coolant depending on the amount of heat generated corresponding to location within the stack.

## Claims

1. A fuel cell stack (110), comprising:
a plurality of electricity generators (113), each including separators (112) attached to and disposed at both sides of a membrane-electrode assembly (111); and
a plurality, of heat releasing means for releasing heat generated from the electricity generators (113), wherein the heat releasing means have different heat release rates depending on their positions with respect to the electricity generators in the stack (110), and wherein the heat release rates of the heat releasing means increase toward a central portion of the stack (110) and the heat releasing means comprise a plurality of fans (115) for directing cooling air to the electricity generators (113), **characterized in that** the plurality of the fans (115) is adapted to direct the cooling air in greater quantities toward electricity generators (113) located at a central portion of the stack (110) than toward electricity generators (113) located at the ends of the stack (110).

2. The stack of claim 1, further comprising a housing constituting an external frame of the stack (110), wherein the housing holds the plurality of fans (113).

## Patentansprüche

1. Brennstoffzellenstapel (110), aufweisend:
eine Vielzahl von Elektrizitätserzeugern (113), von denen jeder Separatoren (112) aufweist, die an beiden Seiten einer Membranelektrodenanordnung (111) befestigt und angeordnet sind; und
eine Vielzahl wärmefreisetzender Mittel zur Freisetzung von Wärme, die von den Elektrizitätserzeugern (113) erzeugt wird, wobei die wärmefreisetzenden Mittel je nach ihren Positionen bezüglich der Elektrizitätserzeuger im Stapel (110) verschiedene Wärmefreisetzungsraten aufweisen, und wobei sich die Wärmefreisetzungsraten der wärmefreisetzenden Mittel zu einem zentralen Abschnitt des Stapels (110) hin erhöhen, und wobei die wärmefreisetzenden Mittel eine Vielzahl von Ventilatoren (115), die Kühlluft zu den Elektrizitätserzeugern (113) leiten, aufweisen, **dadurch gekennzeichnet, dass** die Vielzahl der Ventilatoren (115) ausgebildet ist, die Kühlluft in größeren Mengen zu Elektrizitätserzeugern (113), die an einem zentralen Abschnitt des Stapels (110) angeordnet sind, als zu Elektrizitätserzeugern (113), die an den Enden des Stapels (110) angeordnet sind, zu leiten.

2. Stapel nach Anspruch 1, weiterhin aufweisend ein Gehäuse, das einen äußeren Rahmen des Stapels (110) bildet, wobei das Gehäuse die Vielzahl von Ventilatoren (113) aufnimmt.

## Revendications

1. Empilement de piles à combustibles (110), comprenant :
une pluralité de générateurs d'électricité (113), comprenant chacun des séparateurs (112) fixés et disposés aux deux côtés d'un ensemble membrane-électrode (111) ; et
une pluralité de moyens de relâchement de chaleur pour relâcher de la chaleur générée à partir des générateurs d'électricité (113), les moyens de relâchement de chaleur ayant des taux de relâchement de chaleur différents en fonction de leurs positions par rapport aux générateurs d'électricité dans l'empilement (110), et les taux de relâchement de chaleur des moyens de relâchement de chaleur augmentant vers une partie centrale de l'empilement (110), et les moyens de relâchement de chaleur comprenant une pluralité de ventilateurs (115) pour diriger de l'air de refroidissement vers les générateurs d'électricité (113), **caractérisé en ce que** la pluralité de ventilateurs (115) est adaptée pour diriger l'air de refroidissement en des quantités plus grandes vers des générateurs d'électricité (113) situés dans une partie centrale de l'empilement (110) que vers des générateurs d'électricité (113) situés aux extrémités de l'empilement (110).

2. Empilement selon la revendication 1, comprenant de plus un boîtier constituant un bâti extérieur de l'empilement (110), le boîtier supportant la pluralité de ventilateurs (113).
